# EUROPÄISCHE PATENTSCHRIFT

(11) **EP 3 759 385 B1**
(45) Veröffentlichungstag und Bekanntmachung des Hinweises auf die Patenterteilung: **18.01.2023**
(21) Anmeldenummer: 18807294.6
(22) Anmeldetag: 20.11.2018
(51) Int. Cl.: F16L 37/098

(54) **LÖSBARE STECKVERBINDUNG**
RELEASABLE PLUG CONNECTION
CONNEXION PAR ENFICHAGE LIBÉRABLE

(30) Priorität: 28.02.2018 DE 202018101116 U
(43) Veröffentlichungstag der Anmeldung: 06.01.2021
(60) Teilanmeldung: 21168137.4
(73) Patentinhaber: Neoperl GmbH, 79379 Müllheim (DE)
(72) Erfinder: OECHSLE, Daniel, 79379 Müllheim (DE); REINHARDT, Holger, 79232 March/Buchheim (DE)
(74) Vertreter: Mertzlufft-Paufler, Cornelius
(86) Internationale Anmeldenummer: PCT/EP2018/081935
(87) Internationale Veröffentlichungsnummer: WO 2019/166116

(56) Entgegenhaltungen:
- EP-A1- 1 559 945
- DE-A1-102007 032 324
- DE-A1-102008 013 565
- DE-B3-102008 014 255
- DE-U1-202012 000 597
- FR-A1- 2 919 373
- US-A- 5 466 017
- US-A1- 2003 025 326

## Beschreibung

Die Erfindung betrifft eine lösbare Steckverbindung mit einem rohrförmigen Einsteckteil und einem hülsenförmigen Aufnahmeteil, das eine Einsetzöffnung hat, durch welche das Einsteckteil in einen Hülseninnenraum des Aufnahmeteiles einführbar ist, wobei am Innenumfang des Aufnahmeteiles mindestens eine Ringnut vorgesehen ist, in welcher Ringnut eine Ringdichtung angeordnet ist, die im Ringspalt zwischen dem Innenumfang des Aufnahmeteiles und dem Außenumfang des Einsteckteiles abdichtet, wobei die Einsetzöffnung des Aufnahmeteiles in einem ersten Innenraum-Abschnitt des Hülseninnenraums mündet, der gegenüber einem benachbarten zweiten Innenraum-Abschnitt als Querschnittserweiterung ausgebildet und durch einen Ringabsatz abgegrenzt ist, und wobei in dem ersten Innenraum-Abschnitt des Hülseninnenraums eine Einsetzhülse einsetzbar ist, deren dem Ringabsatz zugewandter Stirnumfangsrand vom Ringabsatz derart beabstandet ist, dass zwischen dem Stirnumfangsrand der Einsetzhülse und dem Ringabsatz die Ringnut ausgebildet ist, und wobei die Einsetzhülse in den ersten Innenraum-Abschnitt einsetzbar ist, bis ein am Hülsenaußenumfang der Einsetzhülse vorgesehener Ringabsatz oder Ringflansch an einem die Einsetzöffnung umgrenzenden Stirnrand des Aufnahmeteiles anliegt.

Aus der US 2001/0048225 A1 ist bereits eine lösbare Steckverbindung mit einem hülsenförmigen Aufnahmeteil vorbekannt, das eine Einsetzöffnung hat, durch welche ein Einsteckteil in einen Hülseninnenraum des Aufnahmeteiles einführbar ist. Am Innenumfang des Aufnahmeteiles ist mindestens eine Ringnut vorgesehen, in der eine Ringdichtung angeordnet ist, die im Ringspalt zwischen dem Innenumfang des Aufnahmeteiles und dem Außenumfang des Einsteckteiles abdichtet. Die Einsetzöffnung des Aufnahmeteiles mündet im Hülseninnenraum in einem ersten Innenraum-Abschnitt, der gegenüber einem benachbarten zweiten Innenraum-Abschnitt als Querschnittserweiterung ausgebildet und durch einen Ringabsatz abgegrenzt ist. Dabei ist in den ersten Innenraum-Abschnitt des Hülseninnenraums eine Einsetzhülse einsetzbar, deren dem Ringabsatz zugewandter Stirnumfangsrand vom Ringabsatz derart beabstandet ist, dass zwischen dem Stirnumfangsrand der Einsetzhülse und dem Ringabsatz die Ringnut ausgebildet ist. Die Einsetzhülse ist in den ersten Innenraum-Abschnitt einsetzbar, bis ein am Hülsenaußenumfang der Einsetzhülse vorgesehener Ringabsatz oder Ringflansch an einem die Einsetzöffnung umgrenzenden Stirnrand des Aufnahmeteiles anliegt.

Aus der DE 20 2012 000 597 U1 ist eine lösbare Steckverbindung vorbekannt, die als lösbare Schlauchverbindung ausgestaltet ist und ein rohrförmiges Einsteckteil aufweist, das an seinem Außenumfang zumindest einen Haltevorsprung trägt, und das ein hülsenförmiges Aufnahmeteil hat, dessen Innenraum zum Einführen des rohrförmigen Einsteckteiles bestimmt ist. Mit dem Aufnahmeteil ist ein Verbindungselement verbunden, an dem wenigstens eine nach innen gerichtete Haltekante aufbiegbar oder aufschwenkbar gehalten ist, welche den Haltevorsprung nach dem Eindrücken des Einsteckteils hintergreift. Die vorbekannte Steckverbindung weist ein hülsenförmiges Sicherungselement auf, welches das Verbindungselement derart verschieblich umgreift, dass das Sicherungselement zwischen einer Lösestellung, in welcher Lösestellung die axiale Schiebebewegung des Sicherungselementes in eine quer dazu orientierte Öffnungsbewegung der Haltekante umsetzbar ist, und einer Sicherungsstellung verschiebbar ist, in welcher Sicherungsstellung das Sicherungselement das Verbindungselement derart umgreift, dass ein Aufbiegen des Verbindungselementes im Bereich der Haltekanten unterbunden ist. In einer Zwischen- oder Kuppelstellung des Sicherungselementes steht das Verbindungselement zumindest bereichsweise derart über das Sicherungselement vor, dass die Haltekanten beim Eindrücken des am Einsteckteil vorgesehenen Haltevorsprungs aufbiegbar sind. Bei der vorbekannten Steckverbindung sind das Einsteckteil und das Aufnahmeteil durch spanende Bearbeitung aus Metall hergestellt. Um den Ringspalt zwischen dem Innenumfang des Aufnahmeteils einerseits und dem Außenumfang des Einsteckteiles andererseits abzudichten, ist am Innenumfang des Aufnahmeteils mindestens eine Ringnut vorgesehen, in welcher Ringnut eine Ringdichtung angeordnet ist. Auch diese Ringnut im Inneren des hülsenförmigen Aufnahmeteils wird durch eine spanende Bearbeitung hergestellt. Dabei sind die im Hülseninneren des hülsenförmigen Aufnahmeteils anhaftenden Metallspäne nach dem Herstellungsvorgang aufwändig zu entfernen, um die vorbekannte Steckverbindung und dessen Aufnahmeteil fertigzustellen. Im Nutgrund der im Hülseninneren des Aufnahmeteiles vorgesehenen Ringnut können sich jedoch weiterhin Metallspäne festsetzen, die anschließend die ordnungsgemäße Abdichtung des zwischen Aufnahmeteil und Einsteckteil vorgesehenen Ringspalts mittels der Ringdichtung beeinträchtigen. Die Beeinträchtigung der Ringdichtung im Bereich des zwischen Aufnahmeteil und Einsetzteil vorgesehenen Ringspalts kann zu unerwünschten und schwerwiegenden Leckagen der Schlauchleitung im Bereich ihrer Steckverbindung führen.

Aus der US 2003/025326 A1 ist bereits eine lösbare Steckverbindung der eingangs erwähnten Art vorbekannt, die zur gasdichten Verbindung einer Gasquelle mit einem gasverbrauchenden Gerät dient. Die vorbekannte Steckverbindung weist ein rohrförmiges Einsteckteil auf, das durch die Einsetzöffnung eines hülsenförmigen Aufnahmeteiles hindurch in dessen Hülseninnenraum einsetzbar ist. Am Innenumfang des Aufnahmeteiles ist mindestens eine Ringnut vorgesehen, in welcher eine Ringdichtung angeordnet ist, die im Ringspalt zwischen dem Innenumfang des Aufnahmeteiles und dem Außenumfang des Einsteckteiles abdichtet. Um die für die Ringdichtung bestimmte Ringnut auszubilden, mündet die Einsetzöffnung des Aufnahmeteiles in einem ersten Innenraum-Abschnitt des Hülseninnenraums, der gegenüber einem benachbarten und in Einsetzrichtung nachfolgenden zweiten Innenraum-Abschnitt als Querschnittserweiterung ausgebildet und durch einen Ringabsatz abgegrenzt ist. In dem ersten Innenraum-Abschnitt des Hülseninnenraums ist eine Einsetzhülse nur soweit eingesetzt, dass zwischen deren dem Ringabsatz zugewandten Stirnumfangsrand einerseits und dem Ringabsatz andererseits die Ringnut ausgebildet ist. Um diese Ringnut nur so breit auszugestalten, dass sie die Ringdichtung aufnehmen kann, ist eine erhebliche Präzision beim Einsetzen der Einsetzhülse und ein entsprechend hoher Herstellungsaufwand beim Montieren der Bestandteile der vorbekannten Steckverbindungen notwendig.

Aus der DE 10 2007 032 324 A1 kennt man bereits eine weitere Steckverbindung der eingangs erwähnten Art, die als Fluidleitungskupplung ausgestaltet ist. Bei dieser vorbekannten Fluidleitungskupplung sind am Innenumfang des Aufnahmeteiles zwei, in Einsetzrichtung voneinander beabstandete Ringnuten vorgesehen, in denen jeweils eine Ringdichtung angeordnet ist, die im Ringspalt zwischen dem Aufnahmeteil und dem Einsteckteil abzudichten haben. Um diese Ringnuten am Innenumfang des Aufnahmeteiles im Bereich des ersten Innenraum-Abschnitts auszubilden, ist in diesen Innenraum-Abschnitt eine ring- oder hülsenförmige Einsetzhülse eingeschoben, die einerseits vom Ringabsatz am Innenumfang des Aufnahmeteiles und andererseits von einem über die Einsetzöffnung des Aufnahmeteiles überstehenden Ringkörper derart beabstandet ist, dass sich zwischen dem Ringabsatz und dem in Einsetzrichtung vorderen Stirnumfangsrand der Einsetzhülse sowie zwischen dem in Einsetzrichtung hinteren Stirnumfangsrand der Einsetzhülse und dem benachbarten Stirnumfangsrand des Ringkörpers jeweils eine der Ringnuten bildet. Da bei dieser vorbekannten Steckkupplung die Einsetzhülse präzise im ersten Innenraum-Abschnitt des Aufnahmeteiles platziert werden muss, damit sich die Ringnuten jeweils mit der für die Ringdichtungen passenden Nutbreite bilden, ist eine gesteigerte Präzision und somit ein entsprechend erhöhter Montageaufwand zur Herstellung der aus DE 10 2007 032 324 A1 vorbekannten Steckverbindung notwendig.

Aus der US 5,466,017 A kennt man eine weitere Steckverbindung der eingangs erwähnten Art, die als Fluidkupplung u. a. in der Automobiltechnik oder der Industrie dienen soll. Um die für die Ringdichtung bestimmte Ringnut zu bilden, ist in dem ersten Innenraum-Abschnitt des Aufnahmeteiles eine Einsetzhülse eingesetzt, die an ihrem Hülsenumfang beidseits mit Abstand von den Stirnenden der Einsetzhülse einen Ringvorsprung und an dem über die Einsetzöffnung überstehenden Stirnende der Einsetzhülse einen den Stirnumfangsrand der Einsetzhülse umgrenzenden Ringabsatz aufweist. Dabei kann die Einsetzhülse soweit in den ersten Innenraum-Abschnitt des Aufnahmeteiles vorgeschoben werden, bis der Ringvorsprung in einer Gebrauchsstellung in eine komplementäre Ringnut am Innenumfang des Aufnahmeteiles einrastet. In dieser Gebrauchsstellung, in der zwischen dem in Einsetzrichtung vorderen Stirnumfangsrand der Einsetzhülse und dem Ringabsatz am Innenumfang des Aufnahmeteiles die Ringnut für die Ringdichtung gebildet ist, liegt der Ringflansch der Einsetzhülse nicht am benachbarten und die Einsetzöffnung umgrenzenden Stirnumfangsrand des Aufnahmeteiles an, sondern ist davon noch beabstandet. Da die Einsetzhülse mit ihrem radial vorstehenden Ringvorsprung im Hülseninnenraum des Aufnahmeteiles bis zur zugeordneten Ringnut vorgeschoben werden muss, und da der Ringvorsprung im Vergleich zum lichten Innendurchmesser des Aufnahmeteiles im Bereich des Hülseninnenraumes einen wesentlich größeren Außendurchmesser hat, ist die Montage dieser Bestandteile, der aus US 5,466,017 A vorbekannten Steckverbindung wesentlich erschwert.

Vergleichbare Nachteile sind auch mit der aus EP 1 559 945 A1 vorbekannten Steckverbindung verbunden, die ebenfalls an ihrer Einsteckhülse einen Ringvorsprung und am Innenumfang des Aufnahmeteiles eine zugeordnete Ringnut aufweist.

Es besteht daher die Aufgabe, eine möglichst leckagefreie Steckverbindung zu schaffen, deren Herstellung und Montage wesentlich vereinfacht ist.

Eine erfindungsgemäße Lösung dieser Aufgabe besteht bei der Steckverbindung der eingangs erwähnten Art in den Merkmalen des geltenden Patentanspruchs 1.

Die erfindungsgemäße Steckverbindung weist ein rohrförmiges Einsteckteil und ein hülsenförmiges Aufnahmeteil auf, die lösbar miteinander verbindbar sind. Das Aufnahmeteil hat eine Einsetzöffnung, durch die das Einsteckteil in einen Hülseninnenraum des Aufnahmeteiles einführbar ist. Am Innenumfang des Aufnahmeteiles ist mindestens eine Ringnut vorgesehen, in welcher Ringnut eine Ringdichtung angeordnet ist, die im Ringspalt zwischen dem Innenumfang des Aufnahmeteiles einerseits und dem Außenumfang des Einsteckteiles andererseits abdichtet. Diese Ringnut wird bei der erfindungsgemäßen Steckverbindung nicht durch spanende Bearbeitung fertiggestellt. Vielmehr ist erfindungsgemäß vorgesehen, dass die Einsetzöffnung des Aufnahmeteiles in einem ersten Innenraum-Abschnitt des Hülseninnenraumes mündet, der gegenüber einem benachbarten zweiten Innenraum-Abschnitt als Querschnittserweiterung ausgebildet und durch einen Ringabsatz abgegrenzt ist. In diesen ersten Innenraum-Abschnitt des Hülseninnenraumes ist eine Einsetzhülse einsetzbar, deren dem Ringabsatz zugewandter Stirnumfangsrand vom Ringabsatz derart beabstandet ist, dass zwischen dem Stirnumfangsrand der Einsetzhülse einerseits und dem Ringabsatz am Innenumfang des Aufnahmeteiles andererseits die für die Ringdichtung vorgesehene Ringnut ausgebildet ist. Da bei der erfindungsgemäßen Steckverbindung auf eine aufwändige Reinigung des Aufnahmeteiles verzichtet werden kann, ist die erfindungsgemäße Steckverbindung und ihr Aufnahmeteil auf einfache Weise herstellbar. Dabei wird die für die Ringdichtung benötigte Ringnut zwischen dem am Innenumfang des Aufnahmeteiles vorgesehenen Ringabsatz einerseits und dem benachbarten Stirnrand der in das Aufnahmeteil eingeschobenen Ein-setzhülse andererseits gebildet.

Um die Montage der erfindungsgemäßen Steckverbindung noch zusätzlich zu erleichtern, ist vorgesehen, dass die Einsetzhülse in den ersten Innenraum-Abschnitt einsetzbar ist, bis ein am Hülsenaußenumfang der Einsetzhülse vorgesehener Ringabsatz oder Ringflansch an einem die Einsetzöffnung umgrenzenden Stirnrand des Aufnahmeteiles anliegt. Die Einsetzhülse weist somit einen Ringabsatz oder Ringflansch auf, welcher die Einsetzbewegung der Einsetzhülse durch die Einsetzöffnung am Aufnahmeteil hindurch in den Hülseninnenraum des Aufnahmeteiles begrenzt.

Der in Patentanspruch 1 beschriebene Erfindungsgegenstand sieht nun vor, dass die Einsetzhülse in dem ersten Innenraum-Abschnitt des Aufnahmeteiles reibschlüssig gehalten ist und dass die Einsetzhülse außenumfangsseitig zumindest eine Einsenkung aufweist. Der Reibschluss zwischen der Einsetzhülse einerseits und dem Innenumfang des Aufnahmeteiles andererseits sollte nämlich so bemessen sein, dass sich die Einsetzhülse durch die Einsetzöffnung des Aufnahmeteiles hindurch in dessen Hülseninnenraum leicht einschieben lässt, und dass dennoch nach dem Einschieben die Einsetzhülse fest und sicher im Hülseninnenraum des Aufnahmeteiles gehalten ist. Zwar kann die Einsetzhülse einen zylinderischen Hülsenaußenumfang haben. Um diesen Reibschluss ausreichend fest bemessen zu können, ist jedoch erfindungsgemäß vorgesehen, dass die Einsetzhülse außenumfangsseitig zumindest eine Einsenkung aufweist. Durch diese Einsenkung wird ein übermäßig starker Reibschluss zwischen der Einsetzhülse einerseits und dem Aufnahmeteil andererseits vermieden.

Damit sich am Innenumfang des Aufnahmeteiles eine Ringnut ausbilden kann, die quer und vorzugsweise rechtwinklig zur Längsachse des Aufnahmeteiles angeordnete Nutwände aufweist, ist es vorteilhaft, wenn der Ringabsatz und der dem Ringabsatz zugewandte Stirnumfangsrand der Einsetzhülse in quer und vorzugsweise rechtwinklig zur Längsachse des Hülseninnenraumes des Aufnahmeteiles angeordneten Ebenen liegen.

Dabei sieht eine bevorzugte Weiterbildung gemäß der Erfindung vor, dass die Einsetzhülse außenumfangsseitig wenigstens zwei Einsenkungen hat, die durch Längsrippen voneinander getrennt sind. Diese Längsrippen können einerseits zum Reibschluss zwischen der Einsetzhülse und dem Aufnahmeteil sorgen, - gleichzeitig steifen diese Längsrippen aber auch die Einsetzhülse im Bereich der Einsenkungen noch zusätzlich aus.

Die Vorteile einer mit Einsenkungen versehenen Einsetzhülse werden noch begünstigt, wenn die Längsrippen reibschlüssig am Innenumfang des Aufnahmeteiles anliegen.

Um unerwünschte Leckageströmungen zu vermeiden, ist es vorteilhaft, wenn die Einsetzhülse mit in Hülsen-Längsrichtung beidseits der zumindest einen Einsenkung angeordneten Hülsen-Umfangsteilbereichen am Innenumfang des Aufnahmeteiles anliegt.

Weiterbildungen gemäß der Erfindung ergeben sich aus der nachfolgenden Figurenbeschreibung in Verbindung mit den An sprüchen sowie der Zeichnung. Nachstehend wird die Erfindung anhand eines bevorzugten Ausführungsbeispieles noch näher beschrieben.

Es zeigt:
- Fig. 1: eine als lösbare Schlauchverbindung ausgestaltete Steckverbindung in einer Seitenansicht, welche Steckverbindung ein hülsenförmiges Aufnahmeteil aufweist, in dessen Hülseninnenraum ein rohrförmiges Einsteckteil eingeschoben ist,
- Fig. 2: die Steckverbindung aus Figur 1 in einem aufgeschnittenen Längsschnitt durch Schnittebene II-II gemäß Figur 1,
- Fig. 3: eine in einer perspektivischen Seitenansicht gezeigte Einsetzhülse, die in den Hülseninnenraum des hülsenförmigen Aufnahmeteiles derart einschiebbar ist, dass sich eine zur Aufnahme einer Ringdichtung bestimmte Ringnut am Innenumfang des Aufnahmeteiles bildet, und
- Fig. 4: die Steckverbindung aus den Figuren 1 bis 3 in einer auseinandergezogenen Darstellung ihrer Bestandteile.

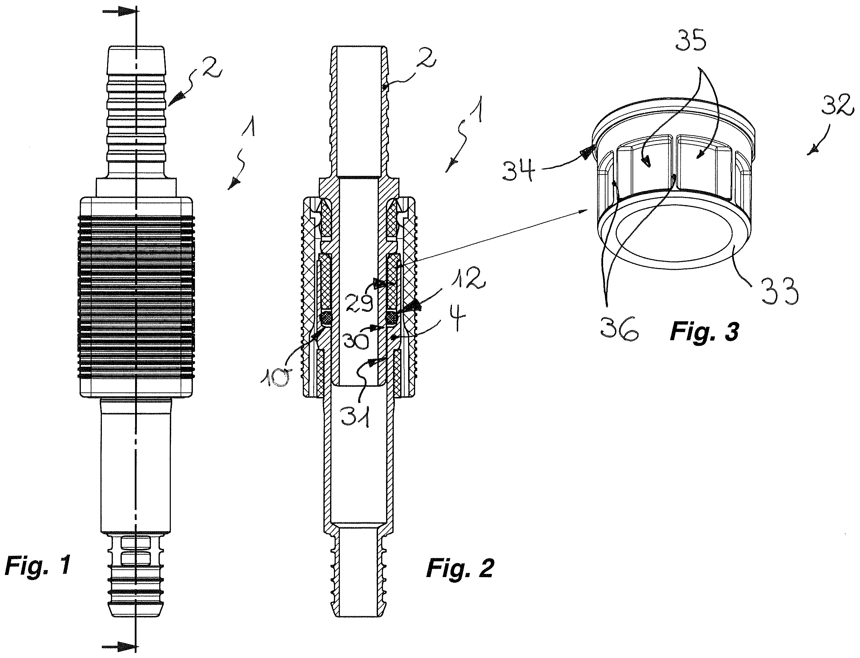

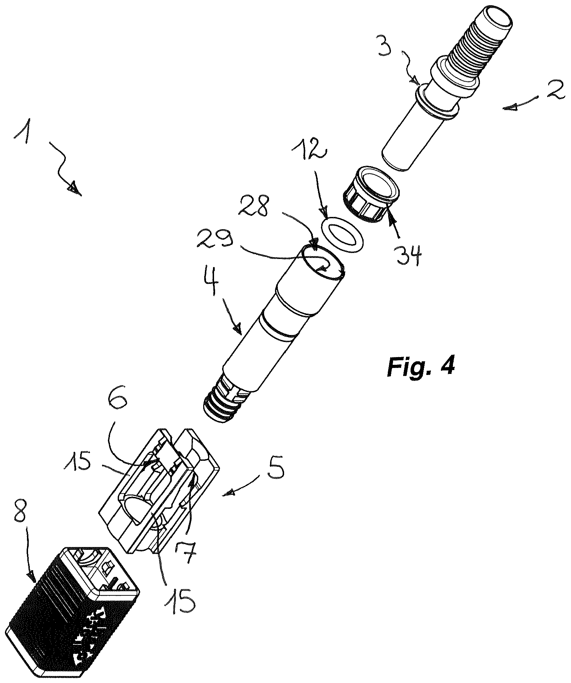

In den Figuren 1 bis 4 ist eine lösbare Steckverbindung 1 und deren wesentlichen Bestandteile dargestellt. Die Steckverbindung 1 weist ein rohrförmiges Einsteckteil 2 auf, das außenumfangsseitig zumindest einen Haltevorsprung 3 trägt. Das Einsteckteil 2 ist in den Hülseninnenraum eines hülsenförmigen Aufnahmeteiles 4 einführbar. Das Aufnahmeteil 4 ist mit einem Verbindungselement 5 verbunden, das nach dem Eindrücken des Einsteckteiles 2 in den Hülseninnenraum die lösbare Verbindung zwischen dem Aufnahmeteil 4 und dem Einsteckteil 2 herzustellen hat. Nach dem Eindrücken des Einsteckteiles 2 in das Aufnahmeteil 4 wird der am Einsteckteil 2 vorgesehene Haltevorsprung 3 von nach innen gerichteten Haltekanten 6, 7 hintergriffen, die am Verbindungselement 5 aufbiegbar oder aufschwenkbar gehalten sind.

Die Steckverbindung 1 weist ein hülsenförmiges Sicherungselement 8 auf, welches das Verbindungselement 5 derart verschieblich umgreift, dass das Sicherungselement 8 zwischen einer Lösestellung und einer in den Figuren 1 und 2 gezeigten Sicherungsstellung verschiebbar ist. Während in der Lösestellung die axiale Schiebebewegung des Sicherungselementes 8 in eine quer dazu orientierte Aufbiege- oder Aufschwenkbewegung der Haltekanten 6, 7 umsetzbar ist, welche die Haltekanten 6, 7 vom Haltevorsprung 3 am Einsteckteil 2 außer Eingriff bringt, umgreift in der Sicherungsstellung das Sicherungselement 8 das Verbindungselement 5 in einem Biege- oder Schwenkbereich derart, dass ein Aufbiegen des Verbindungselementes 5 im Bereich der Haltekanten 6, 7 mit Sicherheit unterbunden wird und die Haltekanten 6, 7 den Haltevorsprung 3 auch unter hoher Last fest hintergreifen. Auch unter einer unkontrollierten Kraftbeaufschlagung des Sicherungselementes 8 in radialer Richtung vermag das Sicherungselement 8 die feste und in axialer Richtung hoch belastbare Verbindung von Einsteckteil 2 und Aufnahmeteil 4 zu sichern.

In einer hier nicht weiter gezeigten Mittel- oder Kuppelstellung, in der die Verbindung bereits betriebssicher ist und den betriebsüblichen Belastungen standhält und die auf dem axialen Schiebeweg des Sicherungselementes 8 zwischen der Sicherungsstellung und der Lösestellung vorgesehen ist, steht das Verbindungselement 5 zumindest bereichsweise derart über das Sicherungselement 8 vor, dass die Haltekanten 6, 7 beim Eindrücken des am Einsteckteil 2 vorgesehenen Haltevorsprungs 3 aufbiegbar sind und den Haltevorsprung 3 am Einsteckteil 2 hintergreifen können. Die über das Sicherungselement 8 vorstehenden Teilbereiche des Verbindungselementes 5, die in einer Signalfarbe eingefärbt sein können, signalisieren dabei, dass sich die Steckverbindung 1 noch nicht in ihrer Sicherungsstellung befindet. Dabei ist der Flächenschwerpunkt der Kontaktfläche des Haltevorsprungs 3 einerseits und der Haltekanten 6, 7 andererseits so gewählt, dass keine nach außen wirkenden Biegekräfte im Verbindungselement 5 und insbesondere in seinen Verbindungsarmen 15 entstehen. Da die erfindungsgemäße Steckverbindung 1 aus wenigen, mit geringem Aufwand zu fertigenden Bestandteilen besteht, ist sie vergleichsweise kostengünstig herstellbar.

In den Figuren 1 und 2 wird deutlich, dass die Steckverbindung 1 als lösbare Schlauchverbindung ausgebildet ist und dass dazu sowohl das Aufnahmeteil 4 als auch das Einsteckteil 3 mit einem Schlauchabschnitt einer flexiblen Schlauchleitung verbunden sind. Die Schlauchabschnitte der Schlauchleitung können durch ein außenseitiges Metallgeflecht verstärkt sein.

In dem Längsschnitt gemäß Figur 2 ist erkennbar, dass am Innenumfang des Aufnahmeteiles 4 eine Ringnut 10 vorgesehen ist, in der eine Ringdichtung 12 angeordnet ist, welche den Ringspalt zwischen dem Innenumfang des Aufnahmeteiles 4 einerseits und dem darin eingeführten Einsteckteil 2 andererseits flüssigkeitsdicht abdichtet. Zur Ausbildung dieser Ringnut 10 weist das Aufnahmeteil 4 eine Einsetzöffnung 28 auf, die in einem ersten Innenraum-Abschnitt 29 des Hülseninnenraumes des Aufnahmeteiles mündet. Dieser erste Innenraum-Abschnitt ist gegenüber einem benachbarten zweiten Innenraum-Abschnitt 31 als Querschnittserweiterung ausgebildet und durch einen Ringabsatz 30 abgegrenzt. Dabei ist in den ersten Innenraum-Abschnitt 29 des Hülseninnenraumes eine Einsetzhülse 32 einsetzbar, deren dem Ringabsatz 30 zugewandter Stirnumfangsrand 33 von dem Ringabsatz 30 derart beabstandet ist, dass zwischen dem Stirnumfangsrand 33 der Einsetzhülse 32 einerseits und dem Ringabsatz 30 andererseits die Ringnut 10 ausgebildet ist. Während das Aufnahmeteil 2 und das Einsteckteil auch aus Metall hergestellt werden können, ist die Einsetzhülse 32 vorzugsweise als Kunststoff und insbesondere als Kunststoffspritzgußteil hergestellt.

Die Einsetzhülse 32 ist in den Hülseninnenraum des Aufnahmeteiles 4 einsetzbar, bis ein am Hülsenaußenumfang der Einsetzhülse 32 vorgesehener Ringabsatz oder Ringflansch 34 an einem die Einsetzöffnung 28 umgrenzenden Stirnrand des Aufnahmeteiles 4 anliegt.

Dabei wird die Einsetzhülse 32 in dem ersten Innenraum-Abschnitt des Aufnahmeteiles 4 reibschlüssig und gegebenenfalls auch formschlüssig gehalten.

Um die zur Aufnahme der Ringdichtung 12 vorgesehene Ringnut 10 ausreichend tief ausgestalten zu können und um die Ringdichtung 12 sicher in der Ringnut 10 zu halten, ist der Ringabsatz 30 und der den Ringabsatz 30 zugewandte Stirnumfangsrand 33 der Einsetzhülse 32 in rechtwinklig zur Längsachse des Hülseninnenraumes des Aufnahmeteiles 4 angeordneten parallelen Ebenen vorgesehen.

In der in Figur 3 gezeigten perspektivischen Seitenansicht der Einsetzhülse ist erkennbar, dass diese außenumfangsseitig zumindest eine Einsenkung 35 hat. Die Einsetzhülse 32 weist mehrere, in gleichmäßigen Abständen über den Umfang der Einsetzhülse 32 verteilt angeordnete Einsenkungen 35 auf, die jeweils durch Längsrippen 36 voneinander getrennt sind. Dabei ist es vorteilhaft, wenn auch die Längsrippen 36 reibschlüssig am Innenumfang des Aufnahmeteiles 4 anliegen. Eine Leckage der Schlauchleitung wird auch im Bereich der Steckkupplung 1 vermieden, wenn die Einsetzhülse 32 mit ihren in Hülsen-Längsrichtung beidseits der zumindest einen Einsenkung 35 angeordneten Hülsen-Umfangsteilbereichen am Innenumfang des Aufnahmeteiles 4 anliegen.

### Bezugszeichenliste

- 1: Steckverbindung
- 2: Einsteckteil
- 3: Haltevorsprung (am Einsteckteil 2)
- 4: Aufnahmeteil
- 5: Verbindungselement
- 6: Haltekante
- 7: Haltekante
- 8: Sicherungselement
- 10: Ringnut
- 12: Ringdichtung
- 15: Verbindungsarme
- 28: Einsetzöffnung
- 29: erster Innenraum-Abschnitt
- 30: Ringabsatz
- 31: zweiter Innenraum-Abschnitt
- 32: Einsetzhülse
- 33: Stirnumfangsrand
- 34: Ringflansch
- 35: Einsenkung
- 36: Längsrippen

## Patentansprüche

1. Lösbare Steckverbindung (1) mit einem rohrförmigen Einsteckteil (2) und einem hülsenförmigen Aufnahmeteil (4), das eine Einsetzöffnung (28) hat, durch welche (28) das Einsteckteil (2) in einen Hülseninnenraum des Aufnahmeteiles (4) einführbar ist, wobei am Innenumfang des Aufnahmeteiles (4) mindestens eine Ringnut (10) vorgesehen ist, in welcher Ringnut (10) eine Ringdichtung (12) angeordnet ist, die im Ringspalt zwischen dem Innenumfang des Aufnahmeteiles (4) und dem Außenumfang des Einsteckteiles (2) abdichtet, wobei die Einsetzöffnung (28) des Aufnahmeteiles (4) in einem ersten Innenraum-Abschnitt (29) des Hülseninnenraums mündet, der (29) gegenüber einem benachbarten zweiten Innenraum-Abschnitt (31) als Querschnittserweiterung ausgebildet und durch einen Ringabsatz (30) abgegrenzt ist, wobei in dem ersten Innenraum-Abschnitt (29) des Hülseninnenraums eine Einsetzhülse (32) einsetzbar ist, deren dem Ringabsatz (30) zugewandter Stirnumfangsrand (33) vom Ringabsatz (30) derart beabstandet ist, dass zwischen dem Stirnumfangsrand (33) der Einsetzhülse (32) und dem Ringabsatz (30) die Ringnut (10) ausgebildet ist, und wobei die Einsetzhülse (32) in den ersten Innenraum-Abschnitt (29) einsetzbar ist, bis ein am Hülsenaußenumfang der Einsetzhülse (32) vorgesehener Ringabsatz oder Ringflansch (34) an einem die Einsetzöffnung (28) umgrenzenden Stirnrand des Aufnahmeteiles (4) anliegt, **dadurch gekennzeichnet, dass** die Einsetzhülse (32) in dem ersten Innenraumabschnitt (29) des Aufnahmeteiles (4) reibschlüssig gehalten ist, und dass die Einsetzhülse (32) außenumfangsseitig zumindest eine Einsenkung (35) aufweist.

2. Steckverbindung nach Anspruch 1, **dadurch gekennzeichnet, dass** der Ringabsatz (30) und der dem Ringabsatz (30) zugewandte Stirnumfangsrand (33) der Einsetzhülse (32) in quer und vorzugsweise rechtwinklig zur Längsachse des Hülseninnenraums des Aufnahmeteiles (4) angeordneten Ebenen liegen.

3. Steckverbindung nach Anspruch 1 oder 2, **dadurch gekennzeichnet, dass** die Einsetzhülse (32) außenumfangsseitig wenigstens zwei Einsenkungen (35) hat, die durch Längsrippen (36) voneinander getrennt sind.

4. Steckverbindung nach einem der Ansprüche 1 bis 3, **dadurch gekennzeichnet, dass** die Längsrippen (36) reibschlüssig am Innenumfang des Aufnahmeteiles (4) anliegen.

5. Steckverbindung nach einem der Ansprüche 1 bis 4, **dadurch gekennzeichnet, dass** die Einsetzhülse (32) mit in Hülsen-Längsrichtung beidseits der zumindest einen Einsenkung (35) angeordneten Hülsen-Umfangsteilbereichen am Innenumfang des Aufnahmeteiles (4) anliegt.

## Claims

1. Releasable plug connection (1) having a tubular plug-in part (2) and having a sleeve-shaped receiving part (4) which has an insertion opening (28) through which (28) the plug-in part (2) is able to be introduced into a sleeve interior space of the receiving part (4), wherein, on the inner circumference of the receiving part (4), at least one annular groove (10) is provided, in which annular groove (10) there is arranged an annular seal (12) which provides sealing in the annular gap between the inner circumference of the receiving part (4) and the outer circumference of the plug-in part (2), wherein the insertion opening (28) of the receiving part (4) opens out into a first interior-space section (29) of the sleeve interior space, which (29), in relation to an adjacent second interior-space section (31), is in the form of a cross-sectional extension and is delimited by an annular shoulder (30), wherein, in the first interior-space section (29) of the sleeve interior space, it is possible for there to be inserted an insertion sleeve (32) whose face circumferential edge (33) facing towards the annular shoulder (30) is spaced apart from the annular shoulder (30) in such a way that the annular groove (10) is formed between the face circumferential edge (33) of the insertion sleeve (32) and the annular shoulder (30), and wherein the insertion sleeve (32) is able to be inserted into the first interior-space section (29) until an annular shoulder or annular flange (24) provided on the sleeve outer circumference of the insertion sleeve (32) bears against a face edge of the receiving part (4) that borders the insertion opening (28), **characterized in that** the insertion sleeve (32) is held in a frictionally engaging manner in the first interior-space section (29) of the receiving part (4), and **in that** the insertion sleeve (32) has at least one depression (35) at the outer circumferential side.

2. Plug connection according to Claim 1, **characterized in that** the annular shoulder (30) and that face circumferential edge (33) of the insertion sleeve (32) which faces towards the annular shoulder (30) lie in planes which are arranged transversely and preferably perpendicularly to the longitudinal axis of the sleeve interior space of the receiving part (4) .

3. Plug connection according to Claim 1 or 2, **characterized in that** the insertion sleeve (32) has at the outer circumferential side at least two depressions (35) which are separated from one another by longitudinal ribs (36).

4. Plug connection according to one of Claims 1 to 3, **characterized in that** the longitudinal ribs (36) bear against the inner circumference of the receiving part (4) in a frictionally engaging manner.

5. Plug connection according to one of Claims 1 to 4, **characterized in that** the insertion sleeve (32) bears against the inner circumference of the receiving part (4) by way of sleeve circumferential part regions, which are arranged on both sides of the at least one depression (35) in the sleeve longitudinal direction.

## Revendications

1. Connexion par enfichage libérable (1) avec un élément d'enfichage en forme de tube (2) et un élément de réception en forme de douille (4) qui possède un orifice d'insertion (28) par lequel l'élément d'enfichage (2) peut être introduit dans un espace intérieur de douille de l'élément de réception (4), dans laquelle est prévue sur la périphérie intérieure de l'élément de réception (4) une bague annulaire (10) dans laquelle est disposé un joint annulaire (12) qui assure l'étanchéité dans la fente annulaire entre la périphérie intérieure de l'élément de réception (4) et la périphérie extérieure de l'élément d'enfichage (2), dans laquelle l'orifice d'insertion (28) de l'élément de réception (4) débouche dans un premier segment d'espace intérieur (29) de l'espace intérieur de douille qui est configuré comme un élargissement de section transversale par rapport à un deuxième segment d'espace intérieur (31) adjacent et est délimité par un épaulement annulaire (30), dans laquelle peut être insérée dans le premier segment d'espace intérieur (29) de l'espace intérieur de douille une douille d'insertion (32) dont le bord périphérique frontal orienté vers l'épaulement annulaire (30) peut être espacé de l'épaulement annulaire (30) de sorte que la bague annulaire (10) est configurée entre le bord périphérique frontal (33) de la douille d'insertion (32) et l'épaulement annulaire (30), et dans laquelle la douille d'insertion (32) peut être insérée dans le premier segment d'espace intérieur (29) jusqu'à ce qu'un épaulement annulaire ou une bride annulaire (34) prévu sur la périphérie extérieure de douille de la douille d'insertion (32) repose contre un bord frontal de l'élément de réception (4) délimitant l'orifice d'insertion (28), **caractérisée en ce que** la douille d'insertion (32) est maintenue par friction dans le premier segment d'espace intérieur (29) de l'élément de réception (4) et que la douille d'insertion (32) présente au moins une cavité (35) sur sa périphérie extérieure.

2. Connexion par enfichage selon la revendication 1, **caractérisée en ce que** l'épaulement annulaire (30) et le bord périphérique frontal (33) de la douille d'insertion (32) orienté vers l'épaulement annulaire (30) sont situés dans des plans disposés transversalement et de préférence perpendiculairement à l'axe longitudinal de l'espace intérieur de douille de l'élément de réception (4).

3. Connexion par enfichage selon la revendication 1 ou 2, **caractérisée en ce que** la douille d'insertion (32) possède sur sa périphérie extérieure au moins deux cavités (35) séparées entre elles par des nervures longitudinales (36).

4. Connexion par enfichage selon une des revendications 1 à 3, **caractérisée en ce que** les nervures longitudinales (36) sont appliquées par friction sur la périphérie intérieure de l'élément de réception (4).

5. Connexion par enfichage selon une des revendications 1 à 4, **caractérisée en ce que** la douille d'insertion (32) est appliquée sur la périphérie intérieure de l'élément de réception (4) avec des zones périphériques de douille disposées de part et d'autre de l'au moins une cavité (35) dans la direction longitudinal de la douille.
